# EUROPÄISCHE PATENTANMELDUNG

(11) **EP 3 296 941 A1**
(43) Veröffentlichungstag der Anmeldung: **21.03.2018**
(21) Anmeldenummer: 17190054.1
(22) Anmeldetag: 08.09.2017
(51) Int. Cl.: G06Q 30/00, G06Q 30/06

(54) **VERFAHREN ZUR AUTOMATISIERTEN KUNDENBERATUNG**

(30) Priorität: 16.09.2016 DE 102016117479
(71) Anmelder: Deutsche Telekom AG, 53113 Bonn (DE)
(72) Erfinder: Göckmann, Stefanie, 63225 Langen (DE)
(74) Vertreter: Braun-Dullaeus Pannen Patent- und Rechtsanwälte

(57) **Zusammenfassung**

Verfahren zum automatischen Erzeugen von Antworten aus Anfragen, insbesondere zu Rechnungsanfragen, die ein Kunde an ein Kundenportal stellt, wobei
das Kundenportal von einem Dienstleister zur Verfügung gestellt wird, zu dem der Kunde in einem Vertragsverhältnis steht, wobei
seitens des Kundenportals Suchbegriffe aus der Anfrage extrahiert und zu einer Suchanfrage verarbeitet werden, wobei
ein selbstlernender Algorithmus selbständig eine Datenbank des Kundenportals zur Suchanfrage durchsucht, wobei
der selbstlernende Algorithmus eine suchanfragenbezogene, kundenbezogene Antwort ermittelt, die dem Kunden über das Telefon und/oder das Internet zugänglich gemacht wird.

## Beschreibung

Die Erfindung betrifft ein Verfahren zum automatischen Erzeugen von Antworten aus Anfragen, insbesondere zu Rechnungsanfragen, die ein Kunde an ein Kundenportal stellt, wobei das Kundenportal von einem Dienstleister zur Verfügung gestellt wird, zu dem der Kunde in einem Vertragsverhältnis steht. Der Dienstleister stellt das Kundenportal entweder im Internet bereit oder ermöglicht einen Zugang zu dem Kundenportal über das Telefon. Der Kunde übermittelt die Anfrage durch eine Texteingabe oder per Sprache an das Kundenportal, wobei das Kundenportal Suchbegriffe aus der Anfrage extrahiert und zu einer Suchanfrage verarbeitet. Hierbei durchsucht ein selbstlernender Algorithmus selbstständig eine Datenbank des Kundenportals bezüglich der Suchanfrage.

Zur Beantwortung und Bearbeitung von Kundenanfragen beschäftigen Unternehmen Kundenberater, die die Anfragen der Kunden via Telefonkontakt oder über sogenannte Text-Chats auf den Internetseiten der Kundenportale individuell beantworten. Hierbei muss für jede einzelne Kundenanfrage zumindest ein Kundenberater bereitgestellt werden, der die Anfrage zunächst mit dem Kunden erörtert und dem Kunden schließlich eine auf die Anfrage bezogene Antwort mitteilt. Zum Teil sind die Anfragen für den Kundenberater, der zuerst am Telefon ist zu komplex, sodass sich dieser Unterstützung von einem weiteren Kundenberater holt. Häufig ist auch der weitere Kundenberater überfordert. Zumeist betreffen die Anfragen relativ einfach Fragestellungen bezüglich der Vertragsverhältnisse des Kunden. Wie zum Beispiel: "Weshalb ist in diesem Monat mehr Geld von meinem Konto abgebucht worden als im vorherigen Monat?"

Nachteilig ist das Bereitstellen von Kundenberater für das Unternehmen mit hohen Kosten verbunden und hat zudem zur Folge, dass meist entweder zu viele oder zu wenige Kundenberater für die Menge an Anfragen zu einem gewissen Zeitpunkt zur Verfügung stehen. Bei einer akuten Störung ist die Anzahl der Kundenberater zumeist deutlich zu gering und der Kunde ist in der Folge oft in einer Warteschlange mit nervtötender Musik gefangen. Werden andererseits nicht alle Kundenberater für das Anfrageaufkommen zu einem bestimmten Zeitpunkt benötigt, so bedeutet dies unnötige Überkapazitäten und Gehaltskosten für das Unternehmen, die sich letztlich auch negativ auf den Kunden auswirken.

Bei typischen Kundenportal, die aus dem Internet bekannt sind und die versuchen Kundenanfragen ohne die Bearbeitung durch einen Kundenberater zu beantworten, werden dem Kunden nur allgemeine Antworten auf Hilfeseiten bzw. sogenannte FAQs (Frequently Asked Questions) bereitgestellt, welche nur dann hilfreich sind, wenn der Kunde keine speziell auf ihn individuell zugeschnittene Anfrage beantwortet haben möchte. Nachteilig kostet es den Kunden viel Zeit die Hilfeseite und die FAQs zu lesen, ohne dass der Kunde eine individuelle Antwort auf seine Anfrage bekommt, die sein Problem lösen würde.

In der DE 10154423 A1 ist ein Verfahren für einen sprachgesteuerten Zugang zu einem Kundenportal gezeigt, bei dem das Kundenportal sprachliche Anweisungen des Kunden entgegennimmt und die Sprachausgabe individuell auf den Kunden anpasst, sodass der Kunde das Gefühl einer persönlicheren Kommunikation bekommt. Diese persönlichere Kommunikation beschränkt sich allerdings nur auf die Sprachausgabe. Die Anfrage des Kunden kann lediglich in einem allgemeinen Kontext mit einer Standardantwort beantwortet werden, wobei die Antworten aus einer Datenbank statischen Inhalts herausgesucht werden. Nachteilig wird keine Möglichkeit aufgezeigt, eine auf den Kudnen und die Anfrage individualisierte Antawort auf die Suchanfrage des Kunden zu generieren.

Aufgabe der vorliegenden Erfindung ist es daher ein Verfahren zur automatisierten Kundenberatung bereitzustellen, bei dem für den Kunden eine automatisierte und vor allem individualisierte Antwort in kurzer Zeit als Reaktion auf seine Suchanfrage generiert wird.

Diese Aufgabe wird durch ein Verfahren mit den Merkmalen des Anspruchs 1 gelöst.

Der Kerngedanke der Erfindung liegt einerseits darin, , dass der selbstlernende Algorithmus automatisch eine suchanfragenbezogene und eine kundenindividuelle Antwort ermittelt, die dem Kunden über das Telefon, Smartphone, Tablet und/oder das Internet zugänglich gemacht wird. Der weitere Kerngedanke liegt darin, dass die Datenbank, auf deren Grundlage der Alkgorithmus die Antwort generiert, ständig auf der Basis der Anfragen und der kundenbezogenen Antworten aktualisiert wird, insbesondere auf der Grundlage der erzeugten Antworten. Der Selbstlerneffekt kommt somit dadurch zustande, dass ständig neue, weil individualisierte Antworten aus einem sich ständig entwickelnden Datenbestand generiert werden. Insbesondere wird die Datenbank um Antworten aktualisiert, die durch den selbstlernenden Algorithmus ermittelt werden.

Die Antwort wird dem Kunden als Sprachausgabe und/oder als Textnachricht auf dem Display eines elektrischen Endgerätes bereitgestellt. Vorteilhaft wird durch dieses erfindungsgemäße Verfahren erreicht, dass der Kunde ohne die Interaktion mit einem Kundenberater dennoch eine suchanfragenbezogene, kundenbezogene Antwort erhält, wobei zugleich die Kosten des Unternehmens für die Kundenberater gesenkt werden und entsprechende Preisnachlässe auch an den Kunden weitergegeben werden können. Zugleich wird dadurch umgangen, dass der Kunde bei seiner Suchanfrage in Warteschleifen warten muss bevor seiner Suchanfrage bearbeitet wird. Der selbstlernende Algorithmus, das Kundenportal und die Datenbank sind vorzugsweise auf einem Server oder einem serverähnlichem System implementiert. Über entsprechende Schnittstellen, wie zum Beispiel über Telefonleitungen oder das Internet, wird eine Verbindung zwischen dem Server und dem Kunden geschaffen.

Die Anzahl der Kundenanrufe wird maßgeblich durch Anfragen bestimmt, die Rechnungen der Kunden betreffen. Oft sind diese Anfragen von niedriger Komplexität, sodass eine Bearbeitung durch einen automatisierten Algorithmus möglich ist. Dies hat zudem den vorteilhaften Effekt, dass die Kundenberater im Idealfall nur für die sehr komplexen Kundenanfragen in Anspruch genommen werden. Um den Algorithmus im Laufe der Zeit zu verbessern, ist der Algorithmus vorteilhaft als selbstlernender Algorithmus ausgestaltet. Gibt der Kunde seine Anfrage und/oder Suchanfrage in ein Suchfeld ein, navigiert ihn der Algorithmus automatisch zur betreffenden Position seiner Rechnung. Der Kunde stellt mit Hilfe von digitalen Assistenten, wie eLiZA, im Kundenportal gezielte Fragen zu seiner individuellen Rechnung. Bisher dienen zumeist Musterrechnungen als Erklärungshilfe für den Kunden. Durch die Erfindung ist es nunmehr möglich, die Fragen des Kunden anhand den Daten seiner eigenen Rechnung zu erläutern, was für den Kunden viel anschaulicher ist. Die Kundenzufriedenheit wird durch die schnelle Bereitstellung der kundenbezogenen, sachbezogenen Antwort gesteigert. Als Basis für die Antworten dienen dem Algorithmus Kundenanfragen via Telefon, E-Mail und/oder Text-Chat. Diese Funktion kann auf andere Service- und Geschäftsbereiche erweitert werden, zum Beispiel Umzugsservices. Zweckmäßig dient das Verfahren externe Unternehmen zur Service-Optimierung. Das erfindungsgemäße Verfahren findet sowohl im Bereich der Privat- als auch der Geschäftskunden Verwendung.

Kann der Algorithmus anhand der Suchbegriffe keine gezielte Suchanfrage erstellen, wird eine nicht-gerichtete Suche durchgeführt, welche die Datenbank in der Art einer Internetsuchmaschine global nach sogenannten "best guesses" durchsucht. Erkennt der Algorithmus anhand der Suchbegriffe eine gezielte Suchanfrage, wird eine gerichtete Suche durchgeführt, wobei die vorgegebene Richtung der Suchanfrage zum schnelleren Auffinden der Antwort dient. Um die Größe des gesamten Suchraums einzuschränken, werden lokale Suchmethoden implementiert, die zwar die Vollständigkeit einschränken, jedoch in der Praxis anwendbar sind.

Bevorzugt umfasst die suchanfragenbezogene, kundenbezogene Antwort Handlungs- und/oder Kaufempfehlungen. Kontaktiert der Kunde das Kundenportal, um sich über das Zustandekommen einer zu hohen Rechnung zu erkundigen, wird ihm durch das Verfahren nicht nur eine passende individuelle Antwort gegeben, sondern auch eine Möglichkeit aufgezeigt, um die Kosten zu reduzieren, indem dem Kunde in der Antwort beispielsweise zu einem Tarifwechsel geraten wird. Das Kundenportal erkennt bevorzugt, wenn sich der Kunde im Ausland befindet und schlägt dem Kunden einen entsprechenden Auslandstarif vor. Die Position des Kunden kann beispielsweise von dem Kundenportal ermittelt werden, wenn der Kunde mit seinem Smartphone telefoniert. Dies kann wahlweise durch die Übermittlung von GPS Koordinaten und/oder durch die Analyse erfolgen mit welchem Funkmast das Smartphone des Kunden verbunden ist. Analoge Daten können über den Internet-Provider ermittelt, wenn sich der Kunde beispielsweise mit seinem Notebook im Kundenportal anmeldet. Die Kaufempfehlung kann sowohl das Abschließen eines neuen Vertrags als auch das Kaufen eines neuen elektronischen Geräts umfassen, das im Gegensatz zu dem Gerät des Kunden aktuelle Netzstandards unterstützt.

Vorteilhaft werden in der Datenbank Kundenanfragen und gespeicherte Antworten hinterlegt. Die Kundenanfragen werden bevorzugt durch die Kundenberater oder die Text-Chats aufgenommen, bearbeitet und sowohl die bearbeiteten Anfragen als auch die Antworten in der Datenbank abgespeichert. Bei der Bearbeitung liegt der Fokus darauf, sich überschneidende Anfragen effektiv zu bündeln und so in der Datenbank abzuspeichern, dass der Algorithmus möglichst effizient arbeitet. Dies umfasst, dass einzelne Datensätze auch gelöscht oder zusammengeführt werden können. Auch berücksichtigt der Algorithmus die Zeit als einen möglichen Faktor, so werden zunächst Datensätze durchsucht, die in letzter Zeit vermehrt zum Auffinden der kundenbezogenen Antworten verwendet wurden. Dadurch wird der Tatsache Rechnung getragen, dass bestimmte Antworten zu einer bestimmten Zeit besonders häufig nachgefragt werden. Dies kann beispielsweise bei Netzstörungszuständen oder Tarifumstellungen der Fall sein. Hierbei ist es für den Algorithmus effizient, die zeitlich nächstliegenden Datensätze zu durchsuchen bevor der Algorithmus Tarifumstellungsdatensätze durchsucht, die einige Jahre zurückliegen. Der abgespeicherte Datensatz der Kundenanfragen wird zudem dahingehend optimiert, dass die in Echtzeit gegeben Antworten des Kundenberaters noch einmal kritisch analysiert und verbessert werden. Der Kundenberater steht bei der Echtzeitberatung unter Zeitdruck, sodass oft nicht die optimale Antwort gegeben wird. Die Anzahl der Kundenanfragen und der gespeicherten Antworten sowie deren Qualität werden durch den Dienstleister stetig erhöht, sodass der Raum für mögliche Suchanfragen sowie die Qualität der Antworten ständig besser werden.

Der selbstlernende Algorithmus wird bevorzugt durch Interaktion mit der Datenbank und/oder durch ein Bewertungssystem verbessert. Indem die Datenbank von dem Dienstleister besser auf Suchanfragen abgestimmt wird, ermöglicht dies dem Selbstlernalgorithmus schneller, effektiver und besser zu arbeiten. Zusätzlich kann der Kunde durch ein Bewertungssystem bewerten wie zufrieden er mit der durch den Algorithmus gefundenen Antwort ist, wodurch eine Rückmeldung für den selbstlernenden Algorithmus geschaffen ist, die der Algorithmus berücksichtigt, um besser zu werden. Bewertet der Kunde eine Antwort als schlecht, wird die zugeordnete Suchstrategie weniger stark gewichtet als wenn der Kunde die Antwort mit einer guten Bewertung versieht. In der Anfangsphase des Algorithmus, können diese Suchanfragen mit nachgeschalteten Bewertungen zu Test- und Verbesserungszwecken von den Kundenberatern selbst vorgenommen werden.

Gemäß einer vorteilhaften Ausgestaltung der Erfindung wird durch die Anmeldung des Kunden im Kundenportal aus der Datenbank ein dem Kunden zugeordneter Datensatz seines Vertragsverhältnisses ermittelt. Dies ermöglicht vorteilhaft, dass der selbstlernende Algorithmus die kundenbezogene Antwort generieren kann, da die Vertragsdaten des jeweiligen Kunden explizit berücksichtigt werden.

Vorzugsweise vergleicht der selbstlernende Algorithmus anhand der Suchanfrage den dem Kunden zugeordneten Datensatz mit einem dem Kunden zugeordnete Zeit Datensatz mit einem früheren Zeit Rang durch eine Suchbaumstrategie. Durch den Vergleich mit dem früheren dem Kunden zugeordneten Datensatz sind Suchanfragen mit kundenbezogenen Antworten möglich wie: "Wieso habe ich diesen Monat mehr für meine Telefonrechnung bezahlt als im letzten Monat?"

Bevorzugt durchsucht der selbstlernende Algorithmus auch bei fehlender Anmeldung des Kunden im Kundenportal die Datenbank anhand der Suchanfrage nach einer kundenbezogenen Antwort. Hierbei ist es zwar nicht immer möglich Fragen bestmöglich individuell zu beantworten, aber dennoch der Algorithmus aufgrund der entsprechend bereitgestellten Datenbank eine Antwort generieren, die deutlich über die Möglichkeiten üblicher FAQ-Sektionen oder Hilfeseiten hinausgeht und dem Kunden anhand von bereits gesammelten und hinterlegten Antworten eine scheinbar individuelle, personenbezogene Antwort bereitstellt.

Bevorzugt erkennt der selbstlernende Algorithmus, dass keine passende kundenbezogene Antwort ermittelt wurde und leitet den Kunden in Service-Portale, Text-Chats, Foren, Communities und/oder zu einem Kundenberater um.

Zusätzlich wird dem Kunden die Möglichkeit einer Anmeldung aufgezeigt, wobei nach erfolgter Anmeldung der dem Kunden zugeordnete Datensatz aus der Datenbank ermittelt wird. Dies ermöglicht, dass die Suchanfrage in der Folge kundenbezogen bearbeitet wird, da auf bestehende Vertragsdetails zurückgegriffen werden kann. Alternativ wird dem Kunden ein passender Kundenberater zugeteilt.

Weitere vorteilhafte Ausgestaltungsmerkmale der vorliegenden Erfindung sind in den Patentansprüchen definiert.

Im Folgenden werden bevorzugter Ausführungsbeispiele unter Bezugnahme auf die begleitende Figur erläutert:

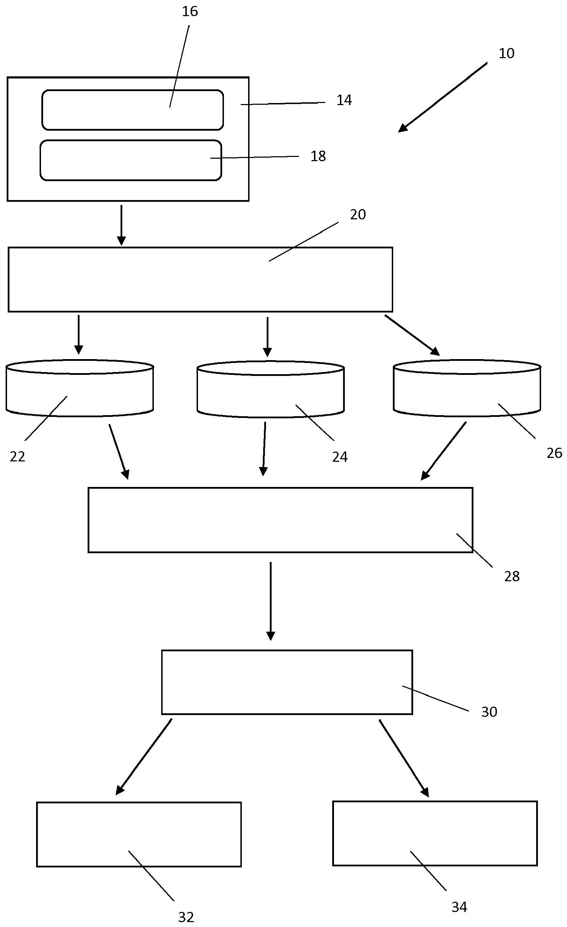

- Fig. 1: zeigt ein Flussdiagramm des erfindungsgemäßen Verfahrens zur automatisierten Kundenberatung.

Fig. 1 zeigt ein Flussdiagramm des erfindungsgemäßen Verfahrens zur automatisierten Kundenberatung 10. Ein in Fig. 1 nicht gezeigter Kunde ruft über ein nicht gezeigtes Endgerät, beispielsweise ein Smartphone oder ein Computer, über das Internet ein Kundenportal 14 eines Dienstleisters auf, welches ihm auf dem Bildschirm seines Endgeräts angezeigt wird. Das Kundenportal 14 des Dienstleisters befindet sich auf einem Server oder auf serverähnlichen Systemen des Dienstleisters, wobei die Funktionalitäten durch Prozessorkerne gesteuert und Daten in hierfür vorgesehene Speicherbereiche abgelegt werden. Der Kunde kann sich im Kundenportal 14 mit seinem Benutzernamen und seinem Passwort anmelden, wenn er in einem Vertragsverhältnis zu dem Dienstleister steht oder wenn er in ein Vertragsverhältnis zu dem Dienstleister eintreten möchte. Durch die Anmeldung 16 kann das Kundenportal 14 dem Kunden personenbezogene Daten, insbesondere dessen Vertragsverhältnisse, zuordnen.

In ein Suchfeld 18 kann der Kunde per Tastatur- oder Spracheingabe Anfragen, insbesondere zu Vertragsdetails, an das Kundenportal 14 übermitteln. Die eingegebenen Suchbegriffe im Suchfeld 18 bilden den Startpunkt 20 für einen selbstlernenden Algorithmus, der die Suchbegriffe zu einer Suchanfrage verarbeitet und eine oder mehrere Datenbanken 22, 24,26 bezüglich der Suchanfrage durchsucht. Die Datenbank 22 umfasst telefonische Kundenberatungsdatensätze, die Datenbank 24 umfasst Datensätze von Text-Chat Kundenberatungen und die Datenbank 26 beinhaltet E-Mai-Kundenberatungsdatensätzen. Richtet sich die Suchanfrage auf Fragen bezüglich des Vertrags des Kunden kann durch dessen Anmeldung 16 der entsprechende Datensatz geladen werden. Anhand der Datensätze in den Datenbanken 22, 24,26 generiert der selbstlernende Algorithmus eine oder mehrere kundenbezogene Antworten als Reaktion auf die Suchanfrage. Am Endpunkt 28 wählt der selbstlernende Algorithmus, bevorzugt mittels statistischer Methoden, im Fall von mehreren möglichen kundenbezogenen und sachbezogenen Antworten die am wahrscheinlich besten passende Antwort aus. Diese Auswahl wird dem Kunden als kundenbezogene, suchanfragenbezogene Antwort 30 auf dem Bildschirm seines Endgeräts angezeigt.

Zusätzlich zu der Antwort 30 werden dem Kunden eine Handlungsempfehlung 32 und eine Kaufempfehlung 34 auf dem Bildschirm seines Endgeräts angezeigt, die bevorzugt im Zusammenhang mit seiner Suchanfrage stehen. Bei der Handlungsempfehlung 32 wird dem Kunden insbesondere empfohlen einen Vertrag, beispielsweise einen Mobilfunkvertrag, abzuschließen, der besser zu seinen aktuellen Nutzungsgewohnheiten passt und bei der Kaufempfehlung 34 wird dem Kunden insbesondere empfohlen ein neues Produkt zu kaufen, das seinem aktuellen Produkt überlegen ist.

Zwei Anwendungsbeispiele demonstrieren im Folgenden die Funktionalität des erfindungsgemäßen Verfahrens 10.

In dem ersten Anwendungsbeispiel stellt der Kunde in dem Kundenportal 14 über das Sucheingabefeld 18 die Frage: "Wieso ist der Gesamtbetrag meiner Rechnung höher als erwartet nach meinem Tarifwechsel?" Der Algorithmus kombiniert die Suchbegriffe zu der Suchanfrage 'Gesamtbetrag+Rechnung+höher+Tarifwechsel', wobei der Algorithmus durch die Anmeldung 16 des Kunden die bisherigen Rechnungen und Vertragsdetails des Kunden in hierfür vorgesehene Speicherbereiche aufruft und verarbeitet. Der Algorithmus gleicht die Suchanfrage mit den bestehenden Datenbanken 22,24, 26 ab und prüft anhand aller hinterlegten Datenmengen, wie der höhere Preis zustande gekommen ist. Der Algorithmus erkennt das kundenbezogene, suchanfragenbezogene Problem und generiert folgende kundenbezogene, suchanfragenbezogene Antwort 30 auf dem Endgerät des Kunden: "Ihre Rechnung beträgt 50 €, weil Sie ein Tarifwechsel vollzogen haben und 30 Minuten die Service Hotline 0180-XXXXX angerufen haben. Der Preis pro Minute betrug 0,50 € pro Minute." Handelt es sich um einen Auslandsanruf des Kunden, kann das Kundenportal 14 dem Kunden eine Auslandsflat anbieten, die vom Kunden direkt im Kundenportal 14 gebucht werden kann. Hierbei erkennt der Algorithmus den "Sinn", der hinter der Suchanfrage steckt dahingehend, dass der Algorithmus auch Datensätze durchsucht, welche die Suchbegriffe zwar nicht aufweisen, trotzdem aber in einem logischen Zusammenhang mit der Suchanfrage stehen. In dem soeben aufgeführten Beispiel könnten beispielsweise folgenden Datensätze der Antwort zugrunde liegen:
1. Vertrag Tarif 1 vom 17. Mai 2015 bis zum 31. Juli 2015; Gesamtkosten 15,78 €
2. Vertrag Tarif 2 vom 1. August 2015 bis zum 31. Dezember 2015; Gesamtkosten 30,03 €

Wie vorstehend gezeigt, fast der Algorithmus die extrahierten Daten als eine für den Kunden verständliche Antwort in der Art zusammen, als ob sie von einem Kundenberater gegeben worden wäre.

Um die Antwort 30 generieren zu können, arbeitet der Algorithmus mittels einer sogenannten Suchbaumstrategie die Daten ab und vergleicht bei einer Anfrage die bestehenden Daten mit den zugeordneten Vorgängerdaten - zum Beispiel Rechnungsdaten der letzten drei Monate im Vergleich zur aktuellen Rechnung. Erkennt der Algorithmus einen Unterschied zwischen den aktuellen und vorherigen Rechnungsdaten wird der Unterschied erkannt und tiefgreifender hinsichtlich der Ursache analysiert. Existiert eine Lösung, so wird diese vom Algorithmus aufgefunden und dem Kunden in Form der Antwort 30 zugänglich gemacht, die Qualität der Antwort entspricht qualitativ der eines Kundenberaters, wird aber dem Kunden deutlich schneller bereitgestellt.

In dem zweiten Anwendungsbeispiel hat der Kunde zwar das Kundenportal 14 aufgerufen, sich aber nicht angemeldet. Bei der Analyse der Suchanfrage kann das Kundenportal 14 hierbei nicht auf die Daten des Kunden zurückgreifen. Trotzdem stehen dem Algorithmus die Datenbanken 22,24 und 26 zur Verfügung, sodass der Algorithmus dem Kunden eine suchanfragenbezogene Antwort 30 generiert. Optional bietet das Kundenportal 14 dem Kunden an, sich anzumelden um den kundenbezogenen Aspekt der Suchanfrage bearbeiten zu können.

Zweckmäßig wird der selbstlernende Algorithmus immer schneller und besser, je häufiger er aufgerufen wird. Der Algorithmus speichert die richtig gegebenen Antworten 30 ab und greift bevorzugt wieder auf diese zurück und optimiert sich hierbei bei jeder neuen Suchanfrage durch ein Bewertungssystem selbst, sodass dem Kunden eine schnelle, automatisierte, individuelle Antwort gemäß seines Anliegens bereitgestellt wird.

## Patentansprüche

1. Verfahren zum automatischen Erzeugen von Antworten aus Anfragen, insbesondere zu Rechnungsanfragen, die ein Kunde an ein Kundenportal (14) stellt,
**dadurch gekennzeichnet,**
**dass** das Kundenportal (14) von einem Dienstleister zur Verfügung gestellt wird, bei dem der Kunde aufgrund eines Vertragsverhältnises registriert ist,
**dass** seitens des Kundenportals (14) Suchbegriffe aus der Anfrage extrahiert und zu einer Suchanfrage verarbeitet werden,
**dass** ein selbstlernender Algorithmus zur Suchanfrage selbständig eine Datenbank (22, 24, 26) des Kundenportals (14) durchsucht,
**dass** der selbstlernende Algorithmus eine suchanfragenbezogene, kundenbezogene Antwort (30) ermittelt, die dem Kunden über das Telefon und/oder das Internet zugänglich gemacht wird, und
**dass** der Inhalt der Datenbank auf der Basis der Anfragen und der kundenbezogenen Antworten ständig aktualisiert wird.

2. Verfahren nach Anspruch 1,
**dadurch gekennzeichnet, dass**
die Datenbank um Antworten aktualisiert wird, die durch den selbstlernenden Algorithmus ermittelt werden.

3. Verfahren nach Anspruch 1 oder 2,
**dadurch gekennzeichnet, dass**
die suchanfragenbezogene, kundenbezogene Antwort (30) Handlungs- und/oder Kaufempfehlungen (32, 34) für den Kunden umfasst.

4. Verfahren nach einem der vorherigen Ansprüche,
**dadurch gekennzeichnet, dass**
in der Datenbank (22, 24, 26) Kundenanfragen und gespeicherte Antworten hinterlegt werden.

5. Verfahren nach einem der vorherigen Ansprüche,
**dadurch gekennzeichnet, dass**
der selbstlernende Algorithmus durch Interaktion mit der Datenbank (22, 24, 26) und/oder durch ein Bewertungssystem verbessert wird.

6. Verfahren nach einem der vorherigen Ansprüche,
**dadurch gekennzeichnet, dass**
durch eine Anmeldung (16) des Kunden im Kundenportal (16) ein dem Kunden zugeordneter Datensatz seines Vertragsverhältnisses aus der Datenbank (22, 24, 26) ermittelt wird.

7. Verfahren nach Anspruch 6,
**dadurch gekennzeichnet, dass**
der selbstlernende Algorithmus anhand der Suchanfrage den dem Kunden zugeordneten Datensatz (22, 24, 26) mit einem dem Kunden zugeordneter Datensatz (22, 24, 26) mit einem früheren Zeitrang durch eine Suchbaumstrategie vergleicht.

8. Verfahren nach einem der vorherigen Ansprüche
**dadurch gekennzeichnet, dass**
der selbstlernende Algorithmus bei fehlender Anmeldung (16) des Kunden in dem Kundenportal (14) die Datenbank anhand der Suchanfrage nach der kundenbezogenen Antwort (30) durchsucht wird.

9. Verfahren nach Anspruch 8,
**dadurch gekennzeichnet, dass**
der Kunde in Service-Portale, Text-Chats, Foren und/oder Communities umgeleitet wird, wenn durch den selbstlernenden Algorithmus keine passende kundenbezogene Antwort (30) ermittelt wird.

10. Verfahren nach einem der vorherigen Ansprüche
**dadurch gekennzeichnet, dass**
dem Kunden die Möglichkeit einer Anmeldung (16) aufgezeigt wird, wobei nach erfolgter Anmeldung (16) ein dem Kunden zugeordneter Datensatz aus der Datenbank (22, 24, 26) ermittelt wird.
